(19) Europäisches Patentamt
European Patent Office
Office européen des brevets

(11) **EP 2 410 065 B1**

(12) **EUROPEAN PATENT SPECIFICATION**

(45) Date of publication and mention
of the grant of the patent:
**05.06.2019 Bulletin 2019/23**

(51) Int Cl.:
*C21B 5/00* *(2006.01)*    *C21B 5/06* *(2006.01)*
*C21B 7/00* *(2006.01)*    *C21B 7/16* *(2006.01)*
*C21B 9/14* *(2006.01)*

(21) Application number: **10769862.3**

(22) Date of filing: **30.04.2010**

(86) International application number:
**PCT/JP2010/057985**

(87) International publication number:
**WO 2010/126172 (04.11.2010 Gazette 2010/44)**

(54) **BLAST FURNACE OPERATION METHOD**

BETRIEBSVERFAHREN FÜR EINEN VERBRENNUNGSOFEN

PROCÉDÉ D'UTILISATION DE HAUT-FOURNEAU

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **30.04.2009 JP 2009110417**
**30.04.2009 JP 2009111001**
**14.10.2009 JP 2009237033**
**24.12.2009 JP 2009291611**
**28.04.2010 JP 2010102884**

(43) Date of publication of application:
**25.01.2012 Bulletin 2012/04**

(73) Proprietor: **JFE Steel Corporation**
**Tokyo 100-0011 (JP)**

(72) Inventors:
• **ASANUMA, Minoru**
**Tokyo 100-0011 (JP)**
• **NOUCHI, Taihei**
**Tokyo 100-0011 (JP)**
• **SATO, Takeshi**
**Tokyo 100-0011 (JP)**
• **MURAO, Akinori**
**Tokyo 100-0011 (JP)**
• **TAKEUCHI, Naoyuki**
**Tokyo 100-0011 (JP)**

(74) Representative: **Hoffmann Eitle**
**Patent- und Rechtsanwälte PartmbB**
**Arabellastraße 30**
**81925 München (DE)**

(56) References cited:
**EP-A2- 0 273 420       WO-A1-2010/137748**
**JP-A- 9 272 904        JP-A- 60 033 305**
**JP-A- 63 282 203       JP-A- S63 282 203**
**JP-A- 2005 105 046     JP-A- 2008 214 735**
**JP-A- 2008 214 735**

## Description

**Technical Field**

The present invention relates to a method for operating a blast furnace, in particular, to a method for operating a blast furnace in order to stably perform low reducing agents rate operation.

**Background Art**

In recent years, global warming due to an increase in the amount of carbon dioxide produced has been a problem. Suppressing the emission of carbon dioxide is also an important issue for steel industry. In the latest blast furnace operation, low reducing agents ratio (low RAR) operation is powerfully promoted. The reducing agents ratio (RAR) is the total amount of fuel injected and coke charged from a furnace top, per ton of pig iron.

However, a reduction in reducing agents ratio (RAR) results in a reduction in blast volume, thus delaying an increase in the temperature of charging materials In an upper portion of a shaft and failing to achieve satisfactory reduction. Furthermore, the adhesion of a zinc compound and so forth to a wall can be promoted, causing inappropriate furnace conditions, such as a change in blast pressure and the inappropriate descent of the burden. In the case where the top gas temperature is reduced to a temperature lower than 100°C, a problem arises in which the water in an exhaust gas is condensed in a pipe.

For normal blast furnace operation, in order to prevent the occurrence of the foregoing inappropriate furnace conditions, in particular, an inadequate increase in the temperature of the burden at an upper portion of the furnace, the following measures are usually taken:

(a) The oxygen enrichment rate is reduced, and the amount of gas is increased (the heat flow ratio is reduced, and the gas temperature is increased);
(b) The amount of fuel, such as pulverized coal, is increased (the heat flow ratio is reduced, and the gas temperature is increased); and
(c) The reduction efficiency (shaft efficiency) is reduced, and the reducing agents ratio is increased.

However, measure (a) is not preferred because the production can be reduced. In the case of measure (b), for a steel works operating at nearly maximum capacity, the amount of increase is limited, depending on the injection capacity. Furthermore, when the amount of fuel injected is increased, the amount of bosh gas is increased to reduce the production. So, it is necessary to also perform oxygen enrichment. However, the amount of oxygen usable is also limited to supply capacity. Measure (c) is directed to low-efficiency operation and is opposite to the intended objective of the reduction of carbon dioxide.

As described above, in the case of performing low-RAR operation in a normal blast furnace, it is difficult to avoid the occurrence of various inappropriate furnace conditions, in particular, the inadequate increase in temperature at the upper portion of the furnace by changing the operating conditions within a usual operational range.

To solve the problem of the delay of the increase in the temperature of the burden at the upper portion of the shaft when low-RAR operation is performed, Patent Document 1 discloses a method in which a gas is injected as a preheating gas from an upper portion of a shaft into a blast furnace in an amount of 10% by volume or less of the amount of the top gas when the top gas temperature is 110°C or lower. Patent Document 1 also discloses that a blast-furnace gas or a mixed gas of the blast-furnace gas and a coke-oven gas stored in a gas holder in a steel works is injected as a preheating gas and that a part of a top gas is recycled and injected as a preheating gas.

[Prior art Document]

[Patent Document]

[Patent Document 1] Japanese Unexamined Patent Application Publication No. 2008-214735

Further relevant prior art may be found in JP 2005 105046 A describing a method for operating a blast furnace and for using reducing gas. Further prior art is found in EP 0 273 420 A2 describing a blast furnace.

**Summary of the Invention**

**Technical Problem**

In the method according to Patent Document 1, if charged layers of raw materials are fluidized or stirred by injecting the preheating gas, the stability of the descent of the raw materials is not maintained, which can lead to inappropriate furnace conditions. It is thus important that the fluidization and stirring of the charged layers of the raw materials are not caused during the injection of the preheating gas. However, Patent Document 1 does not disclose specific gas injection conditions, for example, the injection position of the gas in the height direction of the furnace, the structure of a gas injection means, and the number of the gas injection means in the circumferential direction of the furnace. As illustrated in Fig. 1 of Patent Document 1, in the case where the amount of nearly 10% by volume of the amount of the top gas is injected through a narrow pipe, it is easily estimated, that the raw materials near the injection position are fluidized and stirred.

The present invention aims' to overcome the foregoing problems in the related art and to provide a method for operating a blast furnace, in which in normal blast furnace operation, the method enables us to prevent the occurrence of inappropriate furnace conditions during low-RAR operation, in particular, an inadequate increase in the temperature of charging materials at an upper portion of a furnace and to maintain the stability of the descent of raw materials without causing fluidization or stirring of charged layers of the raw materials by the injection of a gas from a shaft.

**Means to Solve the Problem**

The outline of the present invention to overcome the foregoing problems will be described below.

(1) A method for operating a blast furnace, comprising:

arranging a gas injection portion. (A) between the positions $p_1$ and $p_2$ in the height direction of the furnace, $R_0$ being a throat radius of the blast furnace, pi being a position at a depth of $R_0$ from a stock line, and $p_2$ being a position at 1/3 of the overall height of a shaft from the lower end of the shaft;
blowing a hot blast having an oxygen enrichment rate of 20% by volume or less from a tuyere into the blast furnace; and
injecting a preheating gas from the gas injection portion (A).

(2) In the method for operating a blast furnace described in item (1), the preheating gas is injected from the gas injection portion (A) at a linear velocity of 102 (m/s) or less.
(3) In the method for operating a blast furnace described in item (2), the linear velocity of the preheating gas injected from the gas injection portion (A) is in the range of 6 to 102 (m/s).
(4) In the method for operating a blast furnace described in item (3), the linear velocity of the preheating gas injected is in the range of 10 to 72 (m/s).
(5) In the method for operating a blast furnace described in item (4), the linear velocity of the preheating gas injected is in the range of 15 to 72 (m/s).
(6) In the method for operating a blast furnace described in item (1), the gas injection portion A is arranged between a position at a depth of 7 m from the stock line and the position at 1/3 of the overall height of the shaft from the lower end of the shaft.
(7) In the method for operating a blast furnace described in item (1), at least four or more gas injection portions (A) are arranged at regular intervals in the circumferential direction of the furnace.
(8) In the method for operating a blast furnace described in item (1), the preheating gas having a temperature of 200°C or higher is injected to maintain a top gas temperature at at least 80°C or higher.
(9) In the method for operating a blast furnace described in item (8), the preheating gas has a temperature of 200°C to 1000°C.
(10) In the method for operating a blast furnace described in item (8), the preheating gas is a combustion exhaust gas from which $O_2$ is removed.
(11) In the method for operating a blast furnace described in item (8), the preheating gas is a combustion exhaust gas that contains at least one selected from the group consisting of CO and $CO_2$.
(12) In the method for operating a blast furnace described in item (8), the preheating gas is a gas produced by burning a blast furnace gas.
(13) In the method for operating a blast furnace described in item (8), the preheating gas is a gas produced by heating a blast furnace gas.
(14) In the method for operating a blast furnace described in item (8), the preheating gas is injected from multi-tier injection ports into the furnace, the multi-tier injection ports being arranged in the height direction of the blast furnace.
(15) The method for operating a blast furnace described in item (8) further includes controlling the height position of an injection port through which the preheating gas is injected on the basis of at least one of the temperature of the preheating gas and the top gas temperature.
(16) In the method for operating a blast furnace described in item (1), the preheating gas has a composition such

that $Fe_2O_3$ is reduced.

(17) In the method for operating a blast furnace described in item (16), the preheating gas has a composition such that $Fe_2O_3$ is reduced and such that ZnO is reduced to Zn.

(18) In the method for operating a blast furnace described in item (16), the preheating gas has a ratio of CO to (CO + $CO_2$), i.e., CO/(CO + $CO_2$), of 0.05 or more and has a temperature of 500°C to 900°C.

(19) In the method for operating a blast furnace described in item (17), the preheating gas has a ratio of CO to (CO + $CO_2$), i.e., CO/(CO + $CO_2$), of 0.05 or more and has a temperature of 800°C to 900°C.

**Advantageous Effects of Invention**

According to the present invention, in normal blast furnace operation, it is possible to prevent an inadequate increase in the temperature of charging materials at an upper portion of a furnace during low-RAR operation, to effectively inhibit, for example, the adhesion of a zinc compound to a wall and water condensation due to a reduction in top gas temperature, and to maintain the stability of the descent of raw materials without causing fluidization or stirring of charged layers of raw materials by the injection of a gas from a shaft, whereby low-RAR operation is stably performed.

**Brief Description of Drawings**

Fig. 1 is an explanatory drawing schematically illustrating positions of preheating gas injection portions according to Embodiment 1.

Fig. 2 illustrates results from simulations of loads on raw-material particles at positions in the height direction of a furnace and optimal positions of gas injection portions A based on the simulations in Embodiment 1.

Fig. 3 illustrates changes in the temperature of raw materials charged into a blast furnace and the pressure loss of a furnace gas passing through the raw materials in Embodiment 1.

Fig. 4 illustrates the position of a cohesive zone at the time of the injection of pulverized coal in Embodiment 1.

Fig. 5 illustrates the effect of positions of the gas injection portions on a top gas temperature and the temperature of the raw materials located below the injection positions in Embodiment 1.

Fig. 6 illustrates the preferred upper limit of the gas velocity of the preheating gas injected from the gas injection portions in Embodiment 1.

Fig. 7 is an explanatory drawing illustrating the preferred number and configuration of the gas injection portions A arranged in the circumferential direction of the furnace in Embodiment 1.

Fig. 8 is an explanatory drawing illustrating profiles of upper portions of charged layers of raw materials measured with a profile meter located at the furnace top according to INVENTIVE EXAMPLE and COMPARATIVE EXAMPLE 1 in Embodiment 1.

Fig. 9 illustrates the state of the descent of the raw materials measured by sounding according to INVENTIVE EXAMPLE and COMPARATIVE EXAMPLE 2 in Embodiment 1.

Fig. 10 is a longitudinal sectional view of a blast furnace for which a method for operating a blast furnace according to Embodiment 2 is employed.

Fig. 11 is a cross-sectional view of preheating gas injection ports arranged on the blast furnace illustrated in Fig. 10.

Fig. 12 is a graph showing the relationship between the temperature of the preheating gas and the temperature of a furnace top in the Embodiment 2 with respect to the case of no preheating gas injected.

Fig. 13 is a graph showing the relationship between the injection position of the preheating gas and the top gas temperature in the Embodiment 2 with respect to the case of no preheating gas injected.

Fig. 14 is a graph showing the relationship between the amount of preheating gas injected and the top gas temperature in the Embodiment 2 with respect to the case of no preheating gas injected.

Fig. 15 illustrates a temperature distribution in the furnace in the Embodiment 2 when the preheating gas is not injected.

Fig. 16 illustrates a temperature distribution in the furnace in Embodiment 2 when the preheating gas having a temperature of 1000°C is injected.

Fig. 17 illustrates a temperature distribution in the furnace in Embodiment 2 when the preheating gas having a temperature of 200°C is injected.

Fig. 18 illustrates an experimental facility that reproduces the preheating gas injection portions into the blast furnace in Embodiment 3.

Fig. 19 is an equilibrium diagram of iron oxide (CO reduction of $Fe_2O_3$).

Fig. 20 is an equilibrium diagram of zinc oxide.

Fig. 21 is an equilibrium composition diagram of CO and $CO_2$ in a charged layer of coke.

Fig. 22 is an equilibrium diagram of iron oxide (hydrogen reduction of $Fe_2O_3$).
Fig. 23 is an equilibrium diagram (CO reduction of $Fe_2O_3$) in an example according to Embodiment 3.

## Embodiments for carrying out the Invention

### Embodiment 1

Embodiment 1 is aimed at a blast furnace operation, i.e., normal blast furnace operation, in which air or oxygen-enriched air is blown from tuyeres. In the case where oxygen-enriched air is blown from the tuyeres, operation is usually performed at an oxygen enrichment rate of 20% by volume or less and preferably 10% by volume or less. A higher oxygen enrichment rate results in a reduction in the amount of a gas passing through the furnace, causing a significant increase in the amount of a gas required to increase the temperature of the upper portion of the shaft. For this reason, operation is preferably performed at the oxygen enrichment rate as described above.

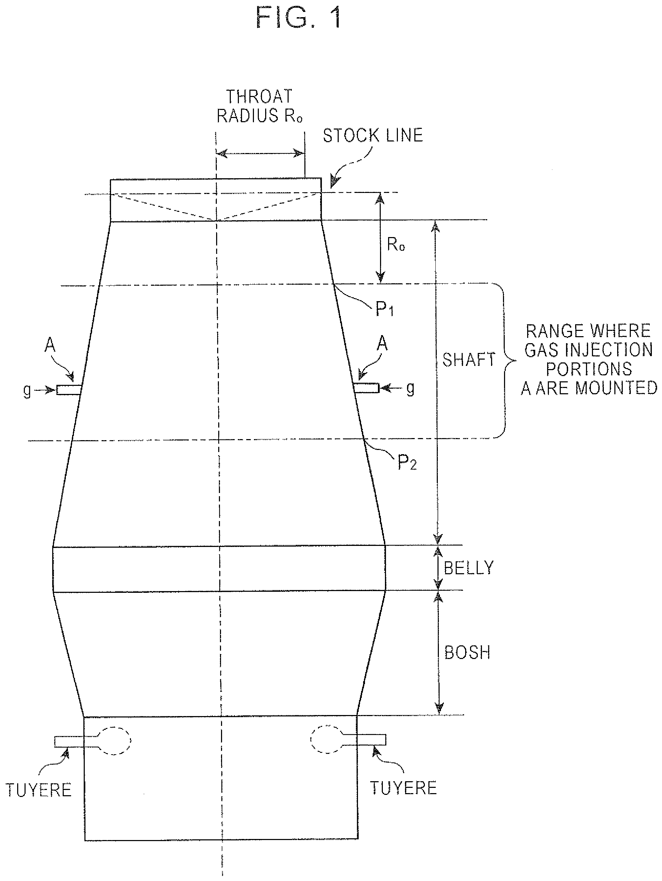

In Embodiment 1, gas injection into the furnace is performed in order to increase the temperature of a furnace top. As schematically illustrated in Fig. 1, upon letting a throat radius be $R_0$, a position at a depth of $R_0$ from a stock line be $p_1$, and a position at 1/3 of the overall height of the shaft from the lower end of the shaft be $p_2$, a preheating gas g is injected into the furnace from the gas injection portions A arranged between the positions $p_1$ and $p_2$ in the height direction of the furnace. Means for injecting a gas from the gas injection portion A is usually a gas injection pipe, a gas burner, or the like.

In Embodiment 1, a main purpose of injecting a gas from the gas injection portions A of the shaft is to compensate for a reduction in blast volume due to low-RAR operation to ensure the flow rate of a gas in the upper portion of the furnace. The injection of a gas having a temperature such that the top gas temperature is unnecessarily reduced is against the spirit of the invention. So, a preheating gas is used as the injection gas. Usually, a gas heated (preheated) with a combustion furnace, an indirect heating furnace, or the like is used as the preheating gas. If a gas has a sufficient temperature when generated, the gas may be used as the preheating gas without heating. Preferred conditions of the preheating gas g will be described below in detail.

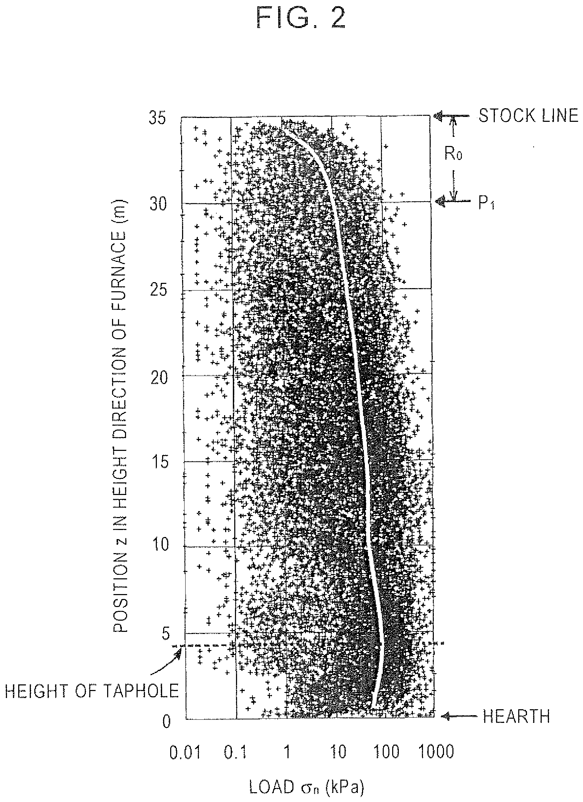

In order not to fluidize charged layers of raw materials in the furnace and not to stir the raw materials by the preheating gas g injected from the gas injection portions A, the charged layers of the raw materials are required to be compacted by loads from the upper portion thereof at the positions of the gas injection portions A. The injection of the preheating gas g at a position near the surface layer where a load is not sufficiently applied fluidizes or stirs the charged layers of the raw materials, thus failing to maintain the stability of the descent of the raw materials. It is difficult to measure the actual load distribution of the furnace. So, in the Embodiment 1, the optimal positions of the gas injection portions A are estimated by simulation. Fig. 2 illustrates the calculation results.

In Fig. 2, the vertical axis indicates the height positions of raw-material particles. The horizontal axis indicates the load on individual raw-material particles (a white curved line indicates the average value of the loads on the raw-material particles). From the figure, the load on the raw-material particles is sharply increased to a position near the position $p_1$ at a depth of $R_0$ (comparable to the throat radius) from the stock line. Below the position, the load is gradually increased. The reason for this is as follows: The load of the raw materials is linearly increased to a depth of about $R_0$ from the stock line. At deeper positions, the charged layers of the raw materials are supported by friction on a furnace wall, thereby relieving the increase in load. Accordingly, in order to stably inject the preheating gas g from the gas injection portions A without causing fluidization or stirring of the charged layers of the raw materials, it is necessary to arrange the gas injection portions A at the position $p_1$ or a deeper position (lower position), the position $p_1$ being located at a depth of $R_0$ (comparable to the throat radius) from the stock line.

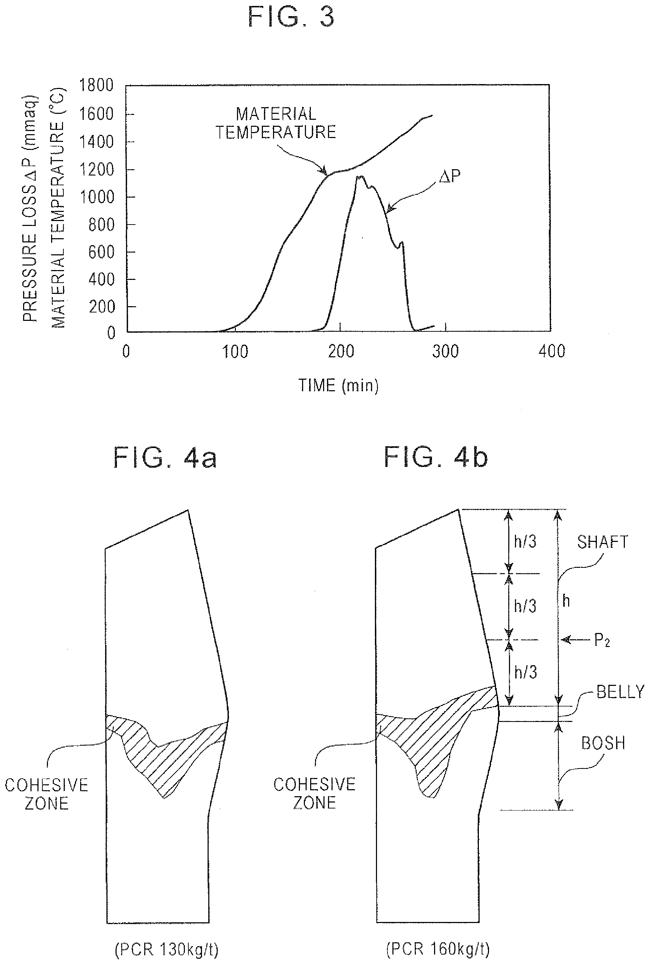

The lower limit position where the gas injection portions A are arranged will be described below. Fig. 3 illustrates an example (measurement example) of changes in the temperature of raw materials charged into a blast furnace and the pressure loss $\Delta P$ of a furnace gas passing through the raw materials. In the figure, a region where a large pressure loss $\Delta P$ is observed is the cohesive zone of ore. The amount of gas passing through the region (cohesive zone) causing a large pressure loss should be minimized. Thus, the gas injection portions A are required to be surely arranged above the cohesive zone. However, the height of the cohesive zone is changed, depending on operating conditions. Furthermore, it is difficult to detect the position of the zone in an actual furnace. So, the position is required to be estimated by simulation.

Fig. 4 illustrates the position of the cohesive zone at the time of the injection of pulverized coal. Fig. 4(a) illustrates the position when the amount of pulverized coal is 130 kg/t. Fig. 4(b) illustrates the position when the amount of pulverized coal is 160 kg/t. The figure demonstrates that an increase in the amount of pulverized coal results in the upward shift of the cohesive zone. The maximum cross-sectional area of the blast furnace is obtained at the belly. In the shaft, the cross-sectional area decreases with decreasing distance from the top. So, the upward shift of the cohesive zone increases the superficial velocity of the passing gas to increase the pressure loss. An excessively high pressure loss results in the rise and change of the cohesive zone, causing the inappropriate descent of the raw materials. So, the cohesive zone is preferably maintained at a height position in the vicinity of the belly. Thus, in the case where the gas injection portions A are arranged at the position $p_2$ or a higher position, the position $p_2$ being located at 1/3 of the overall height (represented by h in Fig. 4) of the shaft from the lower end of the shaft, the gas injection portions A are not located at a position lower than the cohesive zone, even including variations of operation. Furthermore, the operation is estimated to reach a limit due to the increase in superficial velocity described above before the shift of the cohesive zone to the position.

For the foregoing reasons, in the present invention, it is essential that the gas injection portions A are arranged between the positions $p_1$ and $p_2$ in the height direction of the furnace and that the preheating gas g is injected from the gas injection portions A into the furnace.

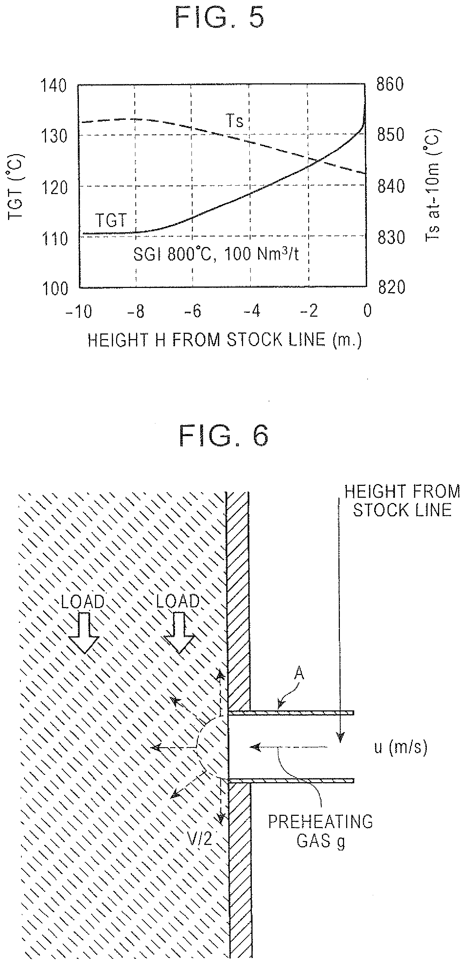

Fig. 5 illustrates the effect of positions of the gas injection portions A on a top gas temperature and the temperature of the raw materials located below the injection positions. Fig. 5 demonstrates that lower positions of the gas injection portions A result in a reduction in top gas temperature (TGT) and an increase in the temperature of the raw materials (Ts). This indicates that a certain depth is needed to heat the raw materials by the preheating gas injected. At a position deeper than 7 m, the heat exchange is almost completed, so that the top gas temperature and the temperature of the raw materials are constant. This demonstrates that a position deeper than 7 m is preferred in order to supply the raw materials with the heat of the preheating gas.

The difference between the preheating gas temperature and a temperature in the furnace at the injection portions is not preferred in view of the uniformity of reactions in the furnace and a thermal stress imposed on a furnace body. So, in the case of injecting the preheating gas with a high temperature of, for example, 1000°C, it is ideal to inject the gas into a substantially low portion of the shaft. However, the lower limit is estimated to be the position at 1/3 of the overall height of the shaft in view of the possibility of the rise of the cohesive zone, as described above.

In the Embodiment 1, the preheating gas g injected from the gas injection portions A preferably has a linear velocity of 102 (m/s) or less. To satisfy these conditions, for example, the number of the gas injection portions A arranged in the circumferential direction of the furnace and the injection diameter of each gas injection portion A are selected, depending on the amount of the injection gas required.

The gas distribution in the blast furnace is controlled by the distribution of the thickness ratio of ore and coke layers. So, the inhibition of the descent of the raw materials near the gas injection portions A by the injection of the preheating gas g must be avoided. Thus, the maximum linear velocity of the preheating gas g injected is preferably specified.

The linear velocity of the preheating gas injected from the gas injection portions (A) is preferably in the range of 6 to 102 (m/s), more preferably 10 to 72 (m/s), and most preferably 15 to 72 (m/s).

As illustrated in Fig. 6, upon letting the velocity of the preheating gas g, which is injected from the gas injection portions A, in the pipe be u, and assuming that the preheating gas g diffuses spherically in the furnace, the velocity of the gas that travels upward is u/2. A gas velocity sufficient to lift the heaviest particle is calculated using Newton's law of resistance described below and balance with gravity and found to be about 102 m/s.

$$\rho_s \frac{\pi D_p^3}{6} g = C \cdot \frac{\pi D_p^2}{4} \cdot \frac{\rho_g u^2}{2}$$

$$u = \sqrt{\frac{4}{3} \cdot \frac{\rho_s}{\rho_g} \cdot \frac{gD_p}{C}} = \sqrt{\frac{4}{3} \cdot \frac{3200}{1.09} \cdot \frac{9.8 \cdot 0.03}{0.44}} = 51.1 \,(\mathrm{m/s})$$

where $\rho_s$, $\rho_g$, g, $D_p$, and C represent the density of a raw material (kg/m$^3$), the density of a gas (kg/m$^3$), the gravitational acceleration (m/s$^2$), the particle size of the raw material (m), and a resistance coefficient (-), respectively.

That is, when u/2 exceeds 51 (m/s), the resistance of the ascending gas is surely larger than gravity acting on the raw material. Accordingly, the linear velocity of the preheating gas g injected from the gas injection portions A is set to 102 (m/s) or less.

In the calculation described above, the linear velocity of the preheating gas g is calculated using a maximum particle size of an iron ore material of 30 mm. Meanwhile, in the case of the calculation using the average particle size of the iron ore material of 15 mm, u/2 = 36.2 (m/s). So, the maximum flow velocity is preferably about 72 (m/s).

$$u = \sqrt{\frac{4}{3} \cdot \frac{\rho_s}{\rho_g} \cdot \frac{g D_p}{C}} = \sqrt{\frac{4}{3} \cdot \frac{3200}{1.09} \cdot \frac{9.8 \cdot 0.015}{0.44}} = 36.2 \, (\mathrm{m/s})$$

The number of tuyeres of a large-scale blast furnace is about 40. It is physically difficult to arrange the number of tuyeres exceeding 40 at the blast furnace. The upper limit of the inner diameter is about 200 mm in view of the diameter of an emergency shutdown valve. For example, suppose the preheating gas is injected from 42 holes each having an inner diameter of 200 mm into the shaft at a flow rate of 30,000 Nm$^3$/h. At a gas temperature of 800°C and a pressure of 3.5 atm, the velocity of the leading end of the gas is calculated to be about 6 m/s. So, the linear velocity of the preheating gas injected from the gas injection portions (A) is preferably 6 (m/s) or more.

In the blast furnace, a light, fine coke powder is most readily blown. In the case of the powder having a particle size of 1 mm and a density of 1000 kg/m$^3$, u/2 = 5.2 (m/s). Thus, none of the raw materials is fluidized at a linear velocity of 10 (m/s) or less. In other words, in order to achieve a linear velocity of 10 (m/s) or less, the number of the gas injection portions A arranged in the circumferential direction of the furnace and the injection diameter of each gas injection portion A need not be increased.

In view of cost and operational risk, a smaller number of the gas injection portions A is better, and a smaller diameter of each gas injection portion A is better. In this case, the gas injection velocity is increased. In the gas piping, the maximum flow rate is determined with respect to the volume flow rate in view of the lifetime due to erosion, pressure loss, noise, and cost. Even allowing for a margin of safety, it might not be necessary to set the linear velocity to 15 (m/s) or less seems.

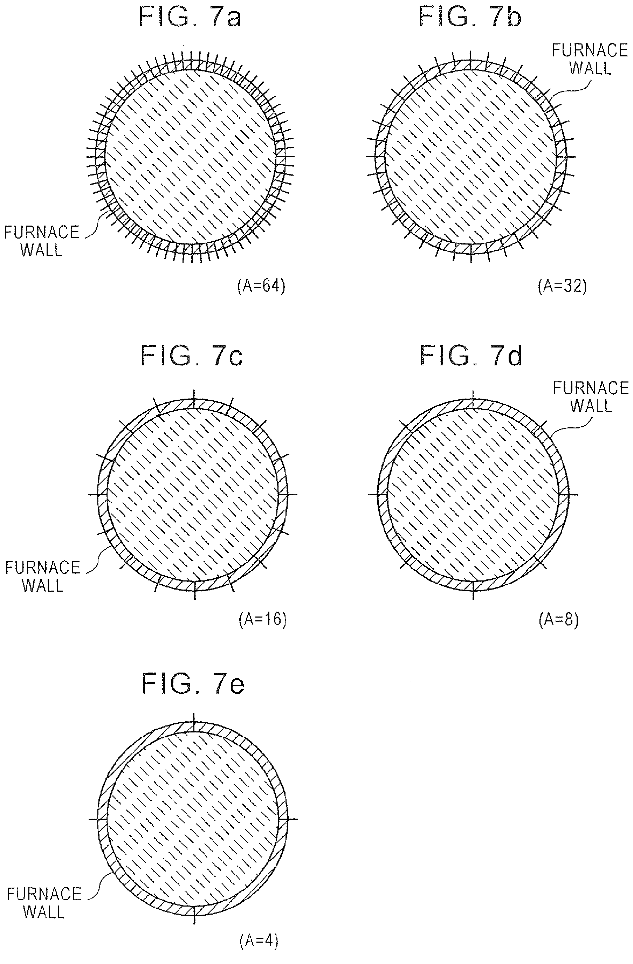

While the number and configuration of the gas injection portions A in the circumferential direction of the furnace are not particularly limited, the gas injection portions A are preferably arranged at a plurality of equally spaced positions in the circumferential direction. In particular, the gas injection portions A are preferably arranged at least equally spaced n positions (where n represents an even number of 4 or more) in the circumferential direction. Among the gas injection portions A arranged at the n positions, the gas injection portions A that are used to inject the preheating gas g are selected at regular intervals in the circumferential direction in response to the total amount of the preheating gas g injected. In this case, the number of the gas injection portions A is 4, 8, 16, 32, 64, or the like. Fig. 7 (horizontal cross section of the shaft) illustrates the configuration of the gas injection portions A arranged. Thin lines shown at regular intervals in the circumferential direction of the furnace wall indicate the positions of the gas injection portions A. "A = number" indicates the number of the gas injection portions A arranged. In an actual facility, it can be difficult to arrange the gas injection portions A at strictly regular intervals in the circumferential direction of the furnace because of the balance with the cooling structure of the furnace body. So, the slight displacement of the position where the gas injection portions A are arranged is allowable.

The injection of the preheating gas g from the gas injection portions A aims to prevent a reduction in top gas temperature during low-RAR operation. So, the injection amount of the preheating gas g required varies depending on the RAR. In the case of a small injection amount required, the amount of gas injected from the gas injection portions A can be uniformly reduced. In fact, however, it is inevitable to reduce the accuracy of the detection and control of the flow rate. It is thus reasonable to thin out the number of the gas injection portions A where the preheating gas g is injected. The blast furnace has an axisymmetric shape. Preferably, the preheating gas g is axisymmetrically injected. To thin out the number of the gas injection portions A, from which the preheating gas g is injected, at regular intervals in the circumferential direction of the furnace, the gas injection portions A used and the gas injection portions A closed are required to be alternately arranged. In this case, if the number of the gas injection portions A arranged is a number, e.g., 7 or 9, other than powers of two, the gas injection portions A are not completely alternately closed. In contrast, for example, if the number of the gas injection portions A arranged is 64, the number of the gas injection portions A where the preheating gas g is injected can be reduced while the axial symmetry is maintained, for example, 32 → 16 → 8 → 4.

As described above, in the case where there are the gas injection portions A where the preheating gas g is not injected, the halt of gas injection for prolonged periods of time can cause the clogging of the injection ports with substances, such as a zinc compound, adherent to the wall. Furthermore, even if the ports are not completely clogged, the injection resistance is increased, so that an appropriate amount of gas is not injected, which is a problem from the viewpoint of maintaining the axial symmetry of the blast furnace. To prevent the clogging and narrowing of the gas injection ports, preferably, a small amount of gas continues to flow or flows intermittently at the gas injection portions A where the preheating gas g is not injected.

The temperature of the preheating gas g injected from the gas injection portions A is not particularly limited. The temperature of the preheating gas g is commonly 100°C or higher and preferably 500°C or higher from the viewpoint of increasing the top gas temperature.

The type of gas used as the preheating gas g is not particularly limited. A gas which does not contain oxygen

(oxygen gas as $O_2$, the same is true in the following description) or which has a low oxygen concentration is preferably used. This is because the presence of oxygen in the preheating gas g reoxidizes iron oxides ($Fe_3O_4$ and FeO) that are being reduced in the furnace.

As the preheating gas g, for example, part of a top gas after removing dust can be recycled. In addition to or in place of the top gas recycled, a blast-furnace gas (B gas) or a mixed gas of the blast-furnace gas and a coke-oven gas (C gas) stored in a gas holder of a steel works may be used. The foregoing gas used as the preheating gas g may be heated (preheated) with a combustion furnace or an indirect heating furnace and used as an injection gas. The gas may be injected after decarbonation. The decarbonation can produce a high-calorie gas mainly containing CO and reduce the amount of oxygen used in a combustion furnace. The amount of the preheating gas g injected is not particularly limited. For example, the gas is injected in an amount such that the top gas temperature can be maintained at about 100°C to about 150°C.

[EXAMPLES]

In a normal blast furnace with a furnace capacity of about 3000 $m^3$, as INVENTIVE EXAMPLE, a test was performed in which 32 gas injection pipes (gas injection portions A) were arranged at positions slightly lower than the position $p_1$ ($R_0$ = 5 m) illustrated in Fig. 1 at regular intervals in the circumferential direction of the furnace and then part of a top gas (10% by volume of the amount of the top gas) was recycled and injected into the furnace through the gas injection pipes. Part of the top gas was discharged from a gas passage located at the downstream side of a top-gas power generation unit, heated to 500°C with a combustion furnace, and introduced into the gas injection pipes (gas injection portions A) as a preheating gas g. The gas injection pipes each had an inner diameter of 200 mm. The gas velocity at the ends of the gas injection pipes was set to a value slightly lower than 20 m/s. This gas velocity satisfies a value of 102 (m/s) or less.

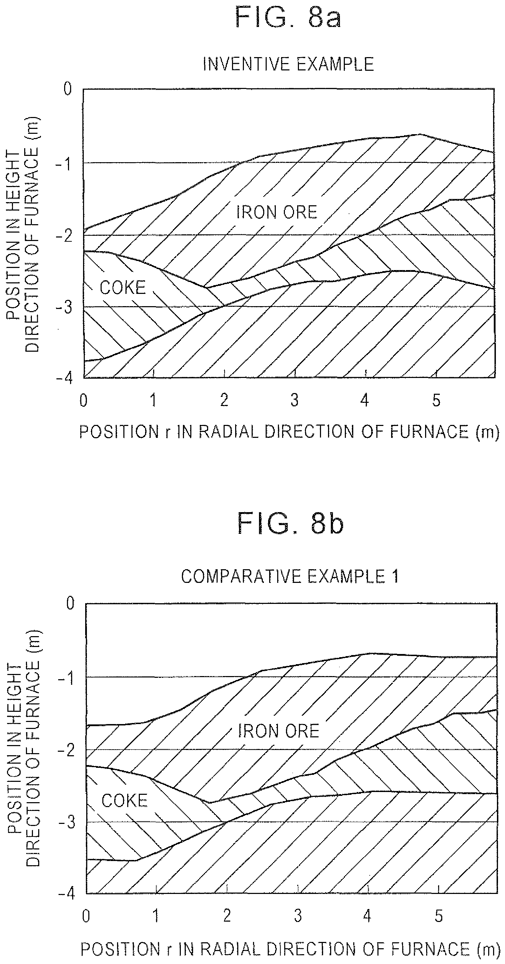

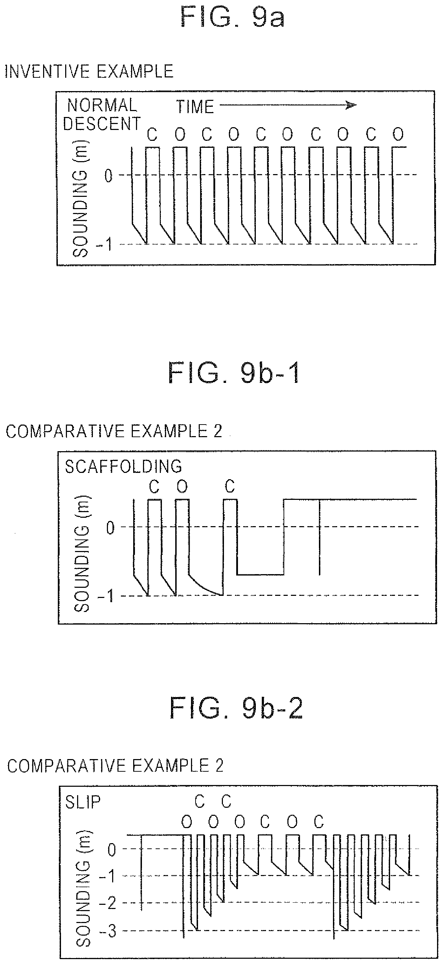

Meanwhile, as COMPARATIVE EXAMPLE 1, 32 gas injection pipes (gas injection portions A) were arranged at positions slightly higher than the position $p_1$ illustrated in Fig. 1 at regular intervals in the circumferential direction of the furnace, and a preheating gas g was injected through the gas injection pipes under the same conditions as those in INVENTIVE EXAMPLE. As COMPARATIVE EXAMPLE 2, 32 gas injection pipes (gas injection portions A) were arranged at the lower-end position of the shaft at regular intervals in the circumferential direction of the furnace, and a preheating gas g was injected through the gas injection pipes under the same conditions as those in INVENTIVE EXAMPLE. Fig. 8 illustrates profiles of upper portions of charged layers of raw materials measured with a profile meter located at the furnace top according to INVENTIVE EXAMPLE and COMPARATIVE EXAMPLE 1. Fig. 9 illustrates the state of the descent of the raw materials measured by sounding according to INVENTIVE EXAMPLE and COMPARATIVE

EXAMPLE 2.

In INVENTIVE EXAMPLE, the profiles of the charged raw materials as illustrated in Fig. 8(a) were obtained without causing abnormal blast pressure. Furthermore, as illustrated in Fig. 9(a), the state of the descent of the raw materials was satisfactory. In COMPARATIVE EXAMPLE 1, in which the gas injection pipes through which the preheating gas g was injected were changed, the phenomena of a sudden increase in blast pressure and great variations in blast pressure occurred. So, the injection positions were returned to the original injection positions (INVENTIVE EXAMPLE). Fig. 8(b) illustrates the profiles of the charged raw materials. A peripheral portion was flattened, and ore flew into a central portion. The profiles of the charged raw materials demonstrate that the stability of the surface of the charged raw materials was inhibited because of the excessively shallow injection positions of the preheating gas g, thus collapsing the profiles.

In COMPARATIVE EXAMPLE 2, in which the gas injection pipes through which the preheating gas g was injected were changed, the descent of the raw materials was stopped as illustrated in Fig. 9(b-1). Then the discontinuous and fast descent of the raw materials, which is what is called a continuous slip, occurred as illustrated in Fig. 9(b-2). In this case, a gas having a high temperature of nearly 1000°C was discharged from the furnace top, and a molten metal temperature was rapidly reduced by nearly 100°C. The reason for this is presumably that the gas was injected below a cohesive layer having a high ventilation resistance to inhibit the successful descent of the cohesive layer.

Next, in INVENTIVE EXAMPLE, the number of the gas injection pipes through which the preheating gas g was injected was halved to 16. At first, the volume of the preheating gas injected was halved to maintain the gas velocity. Then the volume of the gas was gradually increased. At about 230 m/s, the injection pressure and the flow rate varied suddenly, thus losing control. In this case, observations using a camera attached to a gas injection pipe demonstrate that the raw materials were unsteadily moved, the measurement results of the profiles of the charged raw materials were not changed, and the cause thereof was not the surface layer of the charged raw materials but stirring in the charged layers of the raw materials.

**Embodiment 2**

A method for operating a blast furnace according to a Embodiment 2 will be described with reference to the attached drawings.

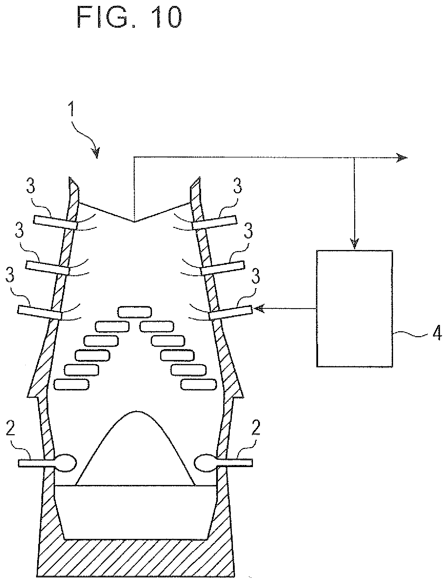

Fig. 10 is a general view of a blast furnace to which the method for operating a blast furnace according to the Embodiment 2 is applied. A shaft indicates a portion that diverges from an upper portion of the blast furnace toward a lower portion.

In a blast furnace 1, an operation is performed in which a hot blast is injected from tuyeres 2, coke charged in the furnace is burned to make pig iron, and the pig iron is tapped through a taphole (not shown) arranged at a hearth. A gas in the blast furnace 1, which is what is called a blast furnace gas, is partially discharged. Part of the blast furnace gas is recycled and injected as a preheating gas into the blast furnace 1 through injection ports arranged at the shaft. In the figure, reference numeral 4 denotes a heating apparatus for heating the blast furnace gas. In the case of using the blast furnace gas as a preheating gas, because the blast furnace gas itself does not burn, another combustible gas is mixed, and then the resulting mixed gas is burned in the heating apparatus 4. Alternatively, the blast furnace gas is heated by an external heating means, e.g., a burner, a heater, or a heat reservoir. As the preheating gas, the blast furnace gas is the most ideal from the viewpoint of maintaining a furnace atmosphere in the blast furnace 1. In addition to the blast furnace gas, a combustion exhaust gas, for example, what is called a coke-oven gas obtained from a coke oven, may be used as the preheating gas. The fact that a reducing atmosphere in the furnace is not inhibited is important for the requirement of the preheating gas. To this end, it is essential that the gas be free from $O_2$. If the gas contains $O_2$, the gas should be used after removing $O_2$. Note that the gas contains CO and $CO_2$ because the gas is a combustion exhaust gas.

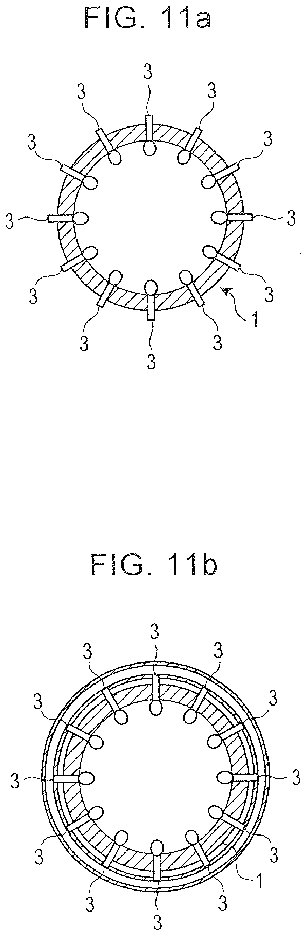

As illustrated in Fig. 11, injection ports 3 for injecting the preheating gas are arranged around the entire perimeter at regular intervals in the circumferential direction of the blast furnace 1, so that the preheating gas is injected from the entire perimeter at regular intervals in the circumferential direction of the blast furnace. Furthermore, multi-tier injection ports 3 are arranged in the height direction of the blast furnace 1. In this embodiment, three-tier injection ports are arranged. In this case, the injection height of the preheating gas can be changed, depending on, for example, the temperature of the preheating gas and the top gas temperature of the blast furnace 1. As illustrated in Fig. 11(a), the injection ports 3 located at each tier may be arranged in such a manner that the preheating gas is adjusted for each injection port 3 and injected. Alternatively, as illustrated in Fig. 11(b), the same preheating gas may be injected from a common connecting pipe.

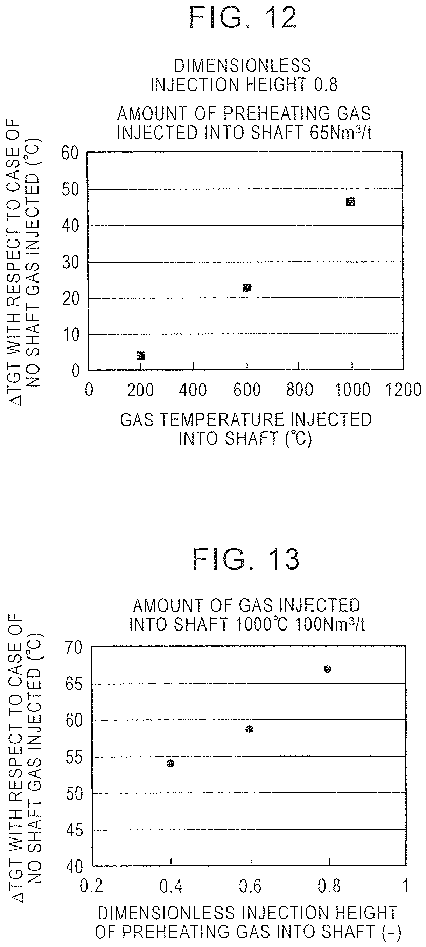

Results of a test on the temperature of the preheating gas, the injection height of the preheating gas, and the amount of the preheating gas injected are described below. In a blast furnace having a furnace capacity of 5000 m$^3$ and operating at an RAR of 470 kg/t, the temperature difference ΔTGT°C at a furnace top between when the preheating gas was not injected and when the preheating gas was injected was studied, the preheating gas being injected at different injection temperatures of 200°C, 600°C, and 1000°C and an injection amount of the preheating gas of 65 Nm$^3$/t. With respect to the injection height of the preheating gas, upon letting the overall length of the shaft of the blast furnace be h0 (m), when the ratio of the injection height h (m) of the preheating gas to the overall length h0 (m) is expressed as a dimensionless shaft height, the preheating gas was injected at a dimensionless shaft height of 0.8. Fig. 12 illustrates the test results.

It is clear from Fig. 12 that the injection of the preheating gas into the shaft increases the top gas temperature as compared with the case where the preheating gas is not injected and that the top gas temperature is increased by about 5°C to about 45°C, depending on the temperature of the preheating gas even at the same injection height and the same amount injected. Accordingly, it was found that the temperature of the preheating gas can be adjusted to the minimum required injection temperature in response to the absolute value of the top gas temperature. The preheating gas injected into the shaft preferably has a temperature equal to or higher than a temperature at the injection position in the furnace. This is because if the temperature of the preheating gas is lower than the temperature at the injection position, the injection can cool the inside of the furnace.

In a blast furnace having a furnace capacity of 5000 m$^3$ and operating at an RAR of 470 kg/t, the temperature difference ΔTGT (°C) at a furnace top between when the preheating gas was not injected and when the injection height of the preheating gas was changed was studied, the preheating gas being injected at an injection temperature of 1000°C and an injection amount of the preheating gas of 100 Nm$^3$/t. With respect to the injection height of the preheating gas, upon letting the overall length of the shaft of the blast furnace be h0 (m), when the ratio of the injection height h (m) of the preheating gas to the overall length h0 (m) is expressed as a dimensionless shaft height, the preheating gas was injected at three levels of the dimensionless shaft height: 0.4, 0.6, and 0.8. Fig. 13 illustrates the test results.

It is clear from Fig. 13 that the injection of the preheating gas into the shaft increases the top gas temperature by 50°C or higher as compared with the case where the preheating gas is not injected and that the top gas temperature varies by about 5°C to about 10°C, depending on the injection height of the preheating gas even at the same injection temperature and the same amount injected. Accordingly, it was found that the injection height can be adjusted so as to achieve the minimum required amount injected in response to the temperature of the preheating gas and the absolute value of the top gas temperature. Also in this case, the preheating gas injected into the shaft preferably has a temperature equal to or higher than a temperature at the injection position in the furnace. This is because if the temperature of the preheating gas is lower than the temperature at the injection position, the injection can cool the inside of the furnace.

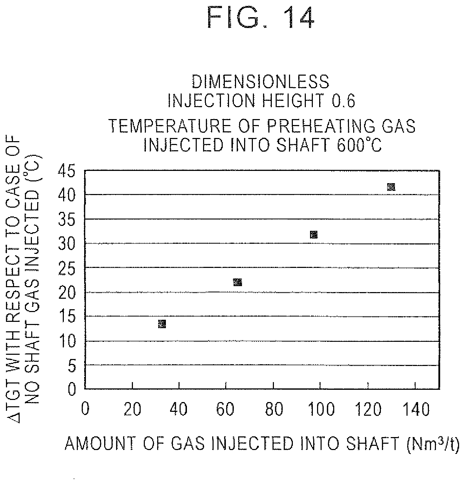

In a blast furnace having a furnace capacity of 5000 $m^3$ and operating at an RAR of 470 kg/t, the temperature difference $\Delta$TGT (°C) at a furnace top between when the preheating gas was not injected and when the preheating gas was injected in different injection amounts of 32.5 $Nm^3/t$, 65 $Nm^3/t$, 97.5 $Nm^3/t$, and 130 $Nm^3/t$ was studied, the injection temperature of the preheating gas being 1000°C. With respect to the injection height of the preheating gas, upon letting the overall length of the shaft of the blast furnace be h0 (m), when the ratio of the injection height h (m) of the preheating gas to the overall length h0 (m) is expressed as a dimensionless shaft height, the preheating gas was injected at a dimensionless shaft height of 0.6. Fig. 14 illustrates the test results.

It is clear from Fig. 14 that the injection of the preheating gas into the shaft increases the top gas temperature as compared with the case where the preheating gas is not injected and that the top gas temperature varies by about 10°C to about 40°C, depending on the injection amount of the preheating gas even at the same injection temperature and the same injection height. Accordingly, it was found that the injection height can be adjusted so as to achieve the minimum required amount injected and the absolute value of the top gas temperature. Also in this case, the preheating gas injected into the shaft preferably has a temperature equal to or higher than a temperature at the injection position in the furnace. This is because if the temperature of the preheating gas is lower than the temperature at the injection position, the injection can cool the inside of the furnace.

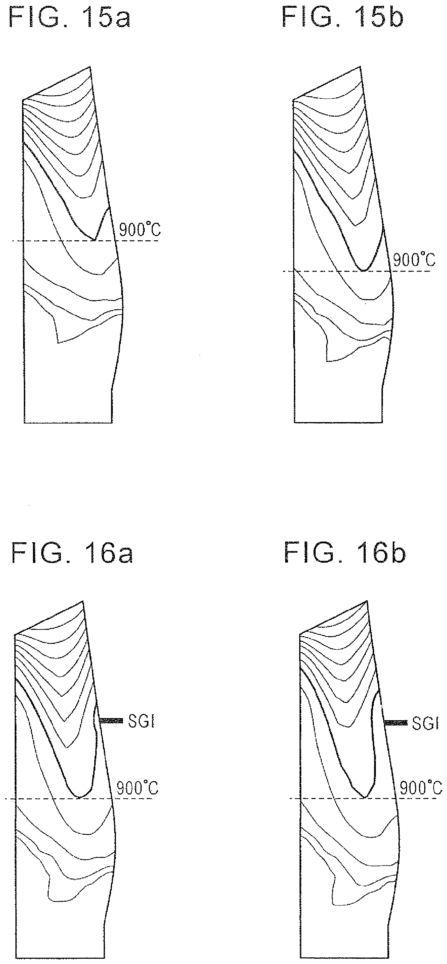

Next, temperature distributions in a furnace will be described when the preheating gas is not injected, when the temperature of the preheating gas is changed, and when the injection height of the preheating gas is changed. The temperature distributions are represented by isotherms of ore. The isotherms are drawn in steps of 100°C. Fig. 15(a) illustrates a temperature distribution in the furnace under what is called normal blast furnace operating conditions at an RAR of 490 kg/t. Fig. 15(b) illustrates a temperature distribution in the furnace under what is called normal blast furnace operating conditions at an RAR of 470 kg/t. A preheating gas is not injected. In this case, the top gas temperature is 125.4°C. However, in the case where the RAR is reduced to 470 kg/t under the same operating conditions, the amount of heat in the furnace is reduced, thus lowering a line indicating 900°C and reducing the top gas temperature to 99.2°C when the preheating gas is not injected.

Fig. 16(a) illustrates a temperature distribution in the furnace at an RAR of 470 kg/t when a preheating gas having a temperature of 1000°C ("SGI" in the figure) is injected from a lower portion of the shaft at an injection amount of the preheating gas of 65 $Nm^3/t$. In this case, for example, the line indicating 900°C in the furnace is elevated, and the top gas temperature is raised to 135.2°C. Fig. 16(b) illustrates a temperature distribution in the furnace at an RAR of 470 kg/t when a preheating gas having a temperature of 1000°C ("SGI" in the figure) is injected from the lower portion of the shaft at an injection amount of the preheating gas of 130 $Nm^3/t$. In this case, for example, the line indicating 900°C in the furnace is not much different from that in Fig. 16(a), but the top gas temperature is raised to 168.2°C.

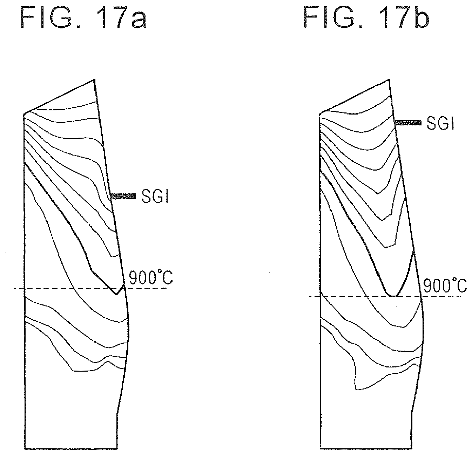

Fig. 17(a) illustrates a temperature distribution in the furnace at an RAR of 470 kg/t when a preheating gas having a temperature of 200°C ("SGI" in the figure) is injected from a lower portion of the shaft at an injection amount of the preheating gas of 130 $Nm^3/t$. In this case, for example, the line indicating 900°C in the furnace is lowered compared with that in Fig. 16, but the top gas temperature is raised to 112°C. Fig. 17(b) illustrates a temperature distribution in the furnace at an RAR of 470 kg/t when a preheating gas having a temperature of 200°C ("SGI" in the figure) is injected from an upper portion of the shaft at an injection amount of the preheating gas of 130 $Nm^3/t$. In this case, for example, the line indicating 900°C in the furnace is not much different from that in Fig. 17(a), but the top gas temperature is raised to more than 80°C.

On the basis of these test results, in the method for operating a blast furnace according to this embodiment, a blast furnace operation is performed in which a preheating gas having a temperature of 200°C or higher is injected from the upper portion of the blast furnace 1, so that the furnace top is maintained at 80°C or higher. In particular, this results in the avoidance of an insufficient increase in top gas temperature even when low-RAR operation (reduction in the emission power of carbon dioxide) is performed. Even if the top gas temperature is reduced to a temperature of lower than 100°C, water condensation in an exhaust gas can be prevented as long as the blast furnace operation is continued with the furnace top maintained at 80°C or higher. Preferably, the furnace top is maintained at 110°C or higher, which is a temperature exceeding 100°C, so that water condensation can be prevented from the viewpoint of temperature.

When a combustion exhaust gas from which $O_2$ is removed is used as a preheating gas, the reduction behavior in the furnace is not inhibited.

When a combustion exhaust gas containing one or both of CO and $CO_2$ is used as a preheating gas, the reduction behavior in the furnace is not inhibited. In this case, various combustion exhaust gases, such as a blast furnace gas, and the sensible heat thereof can be used.

When a combustion exhaust gas is used as a preheating gas, a furnace atmosphere can be ensured.

In the case of heating a preheating gas, the preheating gas is heated by burning the preheating gas itself or by indirect heating. It is thus possible to easily control the temperature of the preheating gas.

The injection of a preheating gas from the entire perimeter at regular intervals in the circumferential direction of the blast furnace results in a uniform increase in top gas temperature.

A preheating gas is injected from the multi-tier injection ports arranged in the height direction of the blast furnace; hence, the height of the injection ports can be adjusted in response to the temperature of the preheating gas and the top gas temperature.

The tiers in the height direction of the injection ports through which the preheating gas is injected are adjusted on the basis of at least one of the temperature of the preheating gas and the top gas temperature, so that the top gas temperature can be easily controlled.

## Embodiment 3

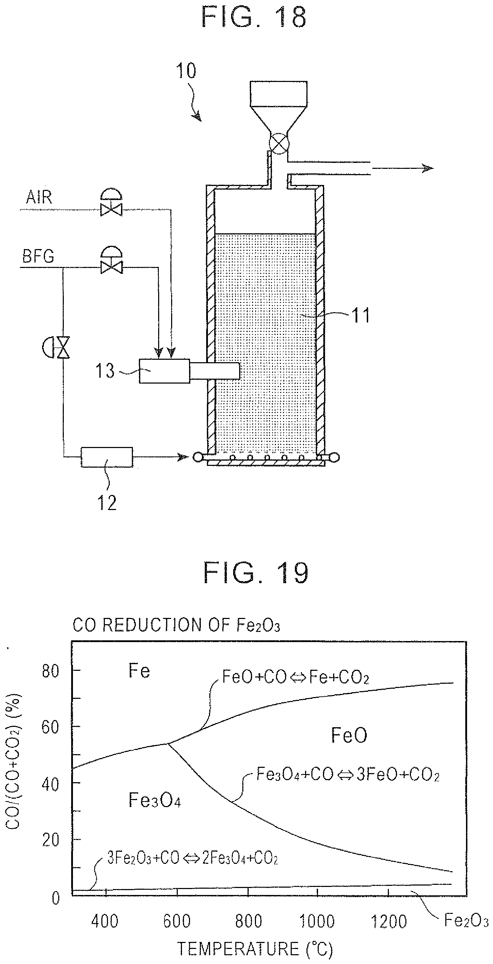

The inventors have conducted an actual experiment to inject a preheating gas having an oxygen concentration of zero using an experimental facility 10, which is illustrated in Fig. 18, for reproducing a portion where a preheating gas is injected into a blast furnace. In Fig. 18, reference numeral 11 denotes a raw material (sintered ores), reference numeral 12 denotes a heater, and reference numeral 13 denotes a burner.

In this experimental facility, before the injection of the preheating gas, a mixed gas containing 30% CO, 20% $CO_2$, and 50% $N_2$, which is prepared to resemble an ascending gas in the furnace, was heated to 500°C with the heater 12 and injected from the bottom. The sintered ores in the furnace were sampled. The sintered ores were predominantly composed of $Fe_3O_4$. The presence of $Fe_2O_3$ was negligible. Then the blast furnace gas was completely burned. The oxygen-free preheating gas was heated to 800°C with the burner 13 and injected. The sintered ores located around the injection point and at an upper portion were sampled. Almost all sintered ores were returned to $Fe_2O_3$. The reason for this is that as is clear from the equilibrium diagram of iron oxide illustrated in Fig. 19, an oxidation reaction not with oxygen but with $CO_2$ occurred as follows:

$$CO_2 + 2Fe_3O_4 \rightarrow CO + 3Fe_2O_3$$

The results demonstrate that the mere use of an oxygen-free gas as a preheating gas fails to prevent the reoxidation of iron ore.

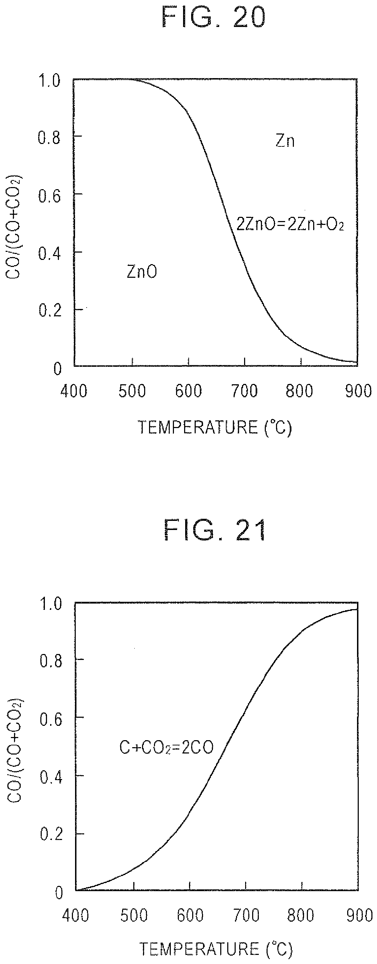

In PATENT DOCUMENT 1, a preheating gas having a temperature of 500°C or higher is injected to prevent the promotion of the adhesion of, for example, a zinc compound (e.g., zinc oxide (ZnO)) to the wall. However, as is clear from the equilibrium diagram of zinc oxide illustrated in Fig. 20, in order to vaporize solid zinc oxide (ZnO) (to form gaseous Zn), the mere injection of the preheating gas having a temperature of 500°C or higher is insufficient and thus fails to appropriately prevent the adhesion of a zinc compound (e.g., zinc oxide (ZnO)) to the wall.

In the experimental facility illustrated in Fig. 18, the inventors charged coke and injected an oxygen-free preheating gas. Then a drum index test of coke in the facility was performed and found that the strength was extremely reduced (increase in the proportion of powder), in some cases. Fig. 21 illustrates the equilibrium composition of CO and $CO_2$ in a coke-charged layer. It is estimated that the injection of a gas in which CO/(CO + $CO_2$) is low, i.e., the concentration of $CO_2$ is high, into a furnace allows $CO_2$ to react with carbon C in coke to form 2CO. This reaction can result in the loss of carbon serving as a matrix of coke, thus reducing the strength. The strength of coke is significantly important for the gas permeability of a blast furnace and thus is strictly controlled. An increase in the proportion of a coke powder in the blast furnace degrades the gas permeability of the blast furnace, causing a reduction in productivity.

It is an object of the Embodiment 3 to provide a method for operating a blast furnace in order to stably perform low reducing agents rate operation (low-RAR operation).

To achieve the foregoing object, in the Embodiment 3, there is provided a method for operating a blast furnace, in which tuyere injection is performed at an oxygen enrichment ratio of 10% by volume or less, and a preheating gas injected from a shaft is a gas such that $Fe_2O_3$ is reduced.

## Embodiment 3-1

In Embodiment 3-1 according to the present invention, in a blast furnace operation in which tuyere blowing is performed at a oxygen enrichment ratio of 10% by volume or less, in the case where a preheating gas is injected from a shaft to increase and ensure a top gas temperature required for performing a low reducing agents rate operation (low-RAR operation), the preheating gas injected is a gas such that $Fe_2O_3$ is reduced.

To prevent the reoxidation from reduced iron ore $Fe_3O_4$ to $Fe_2O_3$ at the time of the injection of the preheating gas as described above, it is important that the preheating gas injected is a gas such that $Fe_2O_3$ is reduced. To this end, the preheating gas should be free from oxygen. Furthermore, with reference to the equilibrium diagram of iron oxide illustrated in Fig. 19, the CO concentration (CO/(CO + $CO_2$)) in the preheating gas should be set to 5% or more, which is a gas composition such that $Fe_3O_4$ is stably present.

Moreover, the preheating gas injected preferably has a temperature of 900°C or lower. The reason for this is as follows: As illustrated in Fig. 21, at higher temperatures, CO is more stable than $CO_2$; hence, carbon in coke is more consumed. That is, an excessively increase in the temperature of the preheating gas results in the promotion of the pulverization of coke.

The proportion of the powder of coke charged was measured at different temperatures of a preheating gas with the experimental facility illustrated in Fig. 18, in which the composition of the preheating gas injected was 6%, which is more than 5%, in terms of $CO/(CO + CO_2)$. A positive correlation was observed, which demonstrated that the temperature of the preheating gas needs to be minimized.

That is, in the case of injecting the preheating gas from the shaft in order to increase the top gas temperature, the heat capacity, which is the product of the amount injected and temperature, is important. However, an increase in the amount injected is advantageous rather than the injection of a high-temperature gas having a temperature of 900°C or higher in view of operational stability.

As described above, in Embodiment 3-1, it is preferred that the composition of the preheating gas injected be 0.05 or more (5% or more) in terms of $CO/(CO + CO_2)$ and that the temperature of the preheating gas injected be 500°C to 900°C.

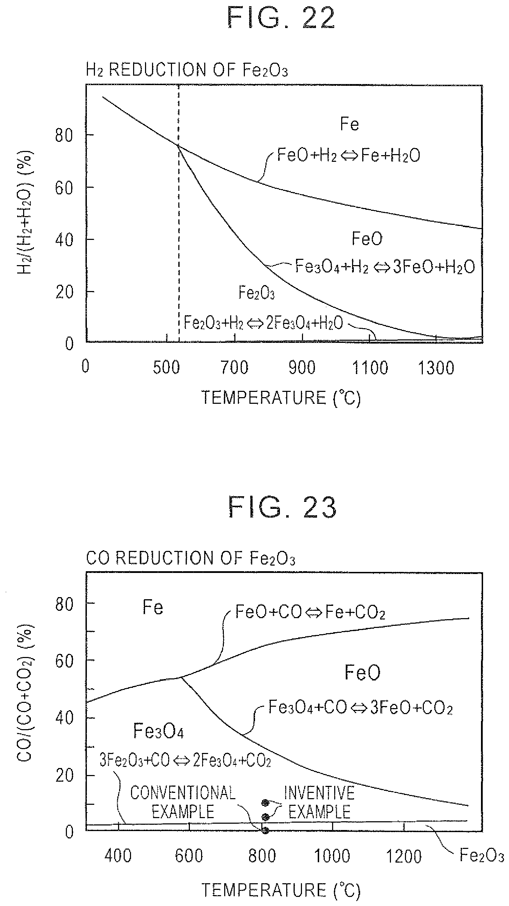

Fig. 22 is an equilibrium diagram of iron oxide in hydrogen. A preheating gas containing hydrogen to some extent is probably effective.

As described above, in Embodiment 3-1, it is possible to increase and ensure the top gas temperature while the reoxidation of ore is prevented, thereby stably performing a low reducing agents rate operation (low-RAR operation).

## Embodiment 3-2

In Embodiment 3-1, in the case where a preheating gas is injected from a shaft to increase and ensure a top gas temperature required for performing a low reducing agents rate operation (low-RAR operation), the preheating gas injected is a gas such that $Fe_2O_3$ is reduced. In Embodiment 3-2 of the present invention, in addition thereto, in order to prevent the adhesion of a zinc compound (e.g., zinc oxide (ZnO)) to a wall, a preheating gas (preheating gas) injected is a gas such that zinc oxide (ZnO) is reduced to zinc (Zn).

The equilibrium diagram of zinc oxide illustrated in Fig. 20 demonstrates that, for example, a gas having a relatively low CO concentration, in which $CO/(CO + CO_2)$ is about 0.2, is capable of reducing ZnO to Zn when preheated to 750°C. In this way, the appropriate control of the combination between the composition and temperature of the preheating gas injected makes it possible to surely remove zinc oxide adhering to the wall.

Accordingly, in Embodiment 3-2, on the basis of the equilibrium diagram of iron oxide illustrated in Fig. 19 and the equilibrium diagram of zinc oxide illustrated in Fig. 20, the preheating gas such that $Fe_2O_3$ is reduced and such that ZnO is reduced to Zn is injected.

Specifically, it is preferred that the composition of the preheating gas be 0.05 or more (5% or more) in terms of $CO/(CO + CO_2)$ and that the temperature of the preheating gas be 800°C to 900°C.

As described above, in part 2 of the Embodiment 3, it is possible to increase and ensure the top gas temperature while the reoxidation of ore is prevented and to appropriately inhibit the adhesion of a zinc compound (e.g., zinc oxide (ZnO)) to the wall, thereby stably performing low reducing agents rate operation (low-RAR operation).

The growth of a zinc compound (e.g., zinc oxide (ZnO)) adhering to the wall is not so fast. Thus, an operation according to part 2 of the Embodiment 3, in which the temperature of the preheating gas injected is set to a relatively high temperature (for example, 800°C to 900°C) in order to achieve an atmosphere such that $Fe_2O_3$ is reduced and such that ZnO is reduced to Zn (atmosphere in which Zn is stably present), is performed within, for example, a few days a month. On the other days, the temperature of the preheating gas is set to a relatively low temperature (for example, 500°C to 750°C) in order to achieve an atmosphere such that $Fe_2O_3$ is reduced and such that ZnO is stably present.

## EXAMPLE 1

To check the effect of the Embodiment 3, a preheating gas was injected into a shaft with the experimental facility illustrated in Fig. 18.

In this case, as INVENTIVE EXAMPLE, the preheating gas was injected into the shaft according to part 2 of the Embodiment 3 of the present invention. That is, the preheating gas had an oxygen concentration of zero. Furthermore, as illustrated in Fig. 23, the CO concentration was set to 6% or 12% in terms of $CO/(CO + CO_2)$. The temperature of the preheating gas was set to 800°C.

In contrast, as CONVENTIONAL EXAMPLE, a preheating gas was injected to the shaft according to Patent Document 1 described above. That is, the preheating gas had an oxygen concentration of zero. Furthermore, as illustrated in Fig. 23, the CO concentration was set to 0% in terms of $CO/(CO + CO_2)$. The temperature of the preheating gas was set to 800°C.

In CONVENTIONAL EXAMPLE, similarly to the foregoing experiment (section "Technical Problem"), a reoxidation phenomenon from $Fe_3O_4$ to $Fe_2O_3$ was observed.

In contrast, in INVENTIVE EXAMPLE, a reoxidation phenomenon from $Fe_3O_4$ to $Fe_2O_3$ did not occur. In addition, when 200 g of the aggregate of a ZnO powder was placed on a wall surface located above the injection port, ZnO was reduced to gaseous Zn (vaporization) to consume 80 g of the aggregate. This demonstrated the effect of inhibiting the adhesion of ZnO to the wall.

## Claims

1. A method for operating a blast furnace, comprising:

   arranging a gas injection portion (A) between the positions $p_1$ and $p_2$ in the height direction of the furnace, $R_0$ being a throat radius of the blast furnace, $p_1$ being a position at a depth of $R_0$ from a stock line, and $p_2$ being a position at 1/3 of the overall height of a shaft from the lower end of the shaft;
   blowing a hot blast having an oxygen enrichment rate of 20% by volume or less from a tuyere into the blast furnace; and
   injecting a preheating gas from the gas injection portion (A) .

2. The method for operating a blast furnace according to claim 1, wherein the preheating gas is injected from the gas injection portion (A) at a linear velocity of 102 (m/s) or less.

3. The method for operating a blast furnace according to claim 2, wherein the linear velocity of the preheating gas injected from the gas injection portion (A) is in the range of 6 to 102 (m/s).

4. The method for operating a blast furnace according to claim 3, wherein the linear velocity of the preheating gas injected is in the range of 10 to 72 (m/s).

5. The method for operating a blast furnace according to claim 4, wherein the linear velocity of the preheating gas injected is in the range of 15 to 72 (m/s).

6. The method for operating a blast furnace according to claim 1, wherein the gas injection portion (A) is arranged between a position at a depth of 7 m from the stock line and the position at 1/3 of the overall height of the shaft from the lower end of the shaft.

7. The method for operating a blast furnace according to claim 1, wherein at least four or more gas injection portions (A) are arranged at regular intervals in the circumferential direction of the furnace.

8. The method for operating a blast furnace according to claim 1, wherein the preheating gas having a temperature of 200°C or more is injected to maintain a top gas temperature at at least 80°C or more.

9. The method for operating a blast furnace according to claim 8, wherein the preheating gas has a temperature of 200°C to 1000°C.

10. The method for operating a blast furnace according to claim 8, wherein the preheating gas is a combustion exhaust gas from which $O_2$ is removed.

11. The method for operating a blast furnace according to claim 8, wherein the preheating gas is a combustion exhaust gas that contains at least one selected from the group consisting of CO and $CO_2$.

12. The method for operating a blast furnace according to Claim 8, wherein the preheating gas is a gas produced by burning a blast furnace gas.

13. The method for operating a blast furnace according to claim 8, wherein the preheating gas is a gas produced by heating a blast furnace gas.

14. The method for operating a blast furnace according to claim 8, wherein the preheating gas is injected from multi-tier injection ports into the furnace, the multi-tier injection ports being arranged in the height direction of the blast furnace.

15. The method for operating a blast furnace according to claim 8, further comprising controlling the height position of an injection port through which the preheating gas is injected on the basis of at least one of the temperature of the preheating gas and the top gas temperature.

16. The method for operating a blast furnace according to claim 1, wherein the preheating gas has a composition such that $Fe_2O_3$ is reduced.

17. The method for operating a blast furnace according to claim 16, wherein the preheating gas has a composition such that $Fe_2O_3$ is reduced and such that $ZnO$ is reduced to $Zn$.

18. The method for operating a blast furnace according to claim 16, wherein the preheating gas has a ratio of CO to $(CO + CO_2)$, i.e., $CO/(CO + CO_2)$, of 0.05 or more and has a temperature of 500°C to 900°C.

19. The method for operating a blast furnace according to claim 17, wherein the preheating gas has a ratio of CO to $(CO + CO_2)$, i.e., $CO/(CO + CO_2)$, of 0.05 or more and has a temperature of 800°C to 900°C.

**Patentansprüche**

1. Verfahren zum Betreiben eines Hochofens, aufweisend:

   Anordnen eines Gasinjektionsabschnitts (A) zwischen den Positionen $p_1$ und $p_2$ in der Höhenrichtung des Ofens, wobei $R_0$ ein Kehlradius des Hochofens ist, $p_1$ eine Position an einer Tiefe von $R_0$ von einer Gicht-Linie ist, und $p_2$ eine Position bei 1/3 der Gesamthöhe eines Schachts von dem unteren Ende des Schachts ist;
   Einblasen eines Heißwinds mit einer Sauerstoffanreicherungsrate von 20 Volumenprozent oder weniger aus einer Düse in den Hochofen; und
   Injizieren eines Vorheizgases aus dem Gasinjektionsabschnitt (A).

2. Verfahren zum Betreiben eines Hochofens nach Anspruch 1, wobei das Vorheizgas aus dem Gasinjektionsabschnitt (A) mit einer Lineargeschwindigkeit von 102 (m/s) oder weniger injiziert wird.

3. Verfahren zum Betreiben eines Hochofens nach Anspruch 2, wobei die Lineargeschwindigkeit des aus dem Gasinjektionsabschnitt (A) injizierten Vorheizgases im Bereich von 6 bis 102 (m/s) liegt.

4. Verfahren zum Betreiben eines Hochofens nach Anspruch 3, wobei die Lineargeschwindigkeit des injizierten Vorheizgases im Bereich von 10 bis 72 (m/s) liegt.

5. Verfahren zum Betreiben eines Hochofens nach Anspruch 4, wobei die Lineargeschwindigkeit des injizierten Vorheizgases im Bereich von 15 bis 72 (m/s) liegt.

6. Verfahren zum Betreiben eines Hochofens nach Anspruch 1, wobei der Gasinjektionsabschnitt (A) zwischen einer Position in einer Tiefe von 7 m von der Gicht-Linie und der Position bei 1/3 der Gesamthöhe des Schachts vom unteren Ende des Schachts angeordnet ist.

7. Verfahren zum Betreiben eines Hochofens nach Anspruch 1, wobei zumindest vier oder mehr Gasinjektionsabschnitte (A) mit regelmäßigen Abständen in der Umfangsrichtung des Ofens angeordnet sind.

8. Verfahren zum Betreiben eines Hochofens nach Anspruch 1, wobei das Vorheizgas, das eine Temperatur von 200°C oder mehr hat, injiziert wird, um ein Gichtgastemperatur bei zumindest 80°C oder mehr zu halten.

9. Verfahren zum Betreiben eines Hochofens nach Anspruch 8, wobei das Vorheizgas eine Temperatur von 200°C bis 1000°C hat.

10. Verfahren zum Betreiben eines Hochofens nach Anspruch 8, wobei das Vorheizgas ein Verbrennungsabgas ist, aus dem $O_2$ entfernt ist.

**11.** Verfahren zum Betreiben eines Hochofens nach Anspruch 8, wobei das Vorheizgas ein Verbrennungsabgas ist, das zumindest eines ausgewählt aus der Gruppe bestehend aus CO und $CO_2$ enthält.

**12.** Verfahren zum Betreiben eines Hochofens nach Anspruch 8, wobei das Vorheizgas ein Gas ist, das durch Verbrennen eines Hochofengases erzeugt wurde.

**13.** Verfahren zum Betreiben eines Hochofens nach Anspruch 8, wobei das Vorheizgas ein Gas ist, das durch Erhitzen eines Hochofengases erzeugt wurde.

**14.** Verfahren zum Betreiben eines Hochofens nach Anspruch 8, wobei das Vorheizgas aus mehrstufigen Injektionsstutzen in den Ofen injiziert wird, wobei die mehrstufigen Injektionsstutzen in Höhenrichtung des Hochofens angeordnet sind.

**15.** Verfahren zum Betreiben eines Hochofens nach Anspruch 8, ferner umfassend das Steuern der Höhenposition eines Injektionsstutzens, durch den das Vorheizgas injiziert wird, auf Grundlage der Temperatur des Vorheizgase und/oder der Temperatur des Gichtgases.

**16.** Verfahren zum Betreiben eines Hochofens nach Anspruch 1, wobei das Vorheizgas eine Zusammensetzung hat, so dass $Fe_2O_3$ reduziert wird.

**17.** Verfahren zum Betreiben eines Hochofens nach Anspruch 16, wobei das Vorheizgas eine Zusammensetzung hat, so dass $Fe_2O_3$ reduziert wird, und so dass ZnO zu Zn reduziert wird.

**18.** Verfahren zum Betreiben eines Hochofens nach Anspruch 16, wobei das Vorheizgas ein Verhältnis von CO zu (CO + $CO_2$), also CO/(CO + $CO_2$), von 0,05 oder mehr und eine Temperatur von 500°C bis 900°C hat.

**19.** Verfahren zum Betreiben eines Hochofens nach Anspruch 17, wobei das Vorheizgas ein Verhältnis von CO zu (CO + $CO_2$), also CO/(CO + $CO_2$), von 0,05 oder mehr und eine Temperatur von 800°C bis 900°C hat.

## Revendications

**1.** Procédé d'utilisation d'un haut fourneau, comprenant :

l'agencement d'une partie d'injection de gaz (A) entre les emplacements $p_1$ et $p_2$ dans la direction de hauteur du four, $R_0$ étant un rayon de bouche du haut fourneau, $p_1$ étant un emplacement situé à une profondeur de $R_0$ par rapport à une ligne de stock, et $p_2$ étant un emplacement à 1/3 de la hauteur totale d'un arbre à partir de l'extrémité inférieure de l'arbre ;
le soufflage d'un souffle chaud ayant un taux d'enrichissement en oxygène de 20 % en volume ou moins à partir d'une tuyère jusque dans le haut fourneau ; et l'injection d'un gaz de préchauffage à partir de la partie d'injection de gaz (A).

**2.** Procédé d'utilisation d'un haut fourneau selon la revendication 1, dans lequel le gaz de préchauffage est injecté à partir de la partie d'injection de gaz (A) à une vitesse linéaire de 102 (m/s) ou moins.

**3.** Procédé d'utilisation d'un haut fourneau selon la revendication 2, dans lequel la vitesse linéaire du gaz de préchauffage injecté à partir de la partie d'injection de gaz (A) est dans la plage de 6 à 102 (m/s).

**4.** Procédé d'utilisation d'un haut fourneau selon la revendication 3, dans lequel la vitesse linéaire du gaz de préchauffage injecté est dans la plage de 10 à 72 (m/s).

**5.** Procédé d'utilisation d'un haut fourneau selon la revendication 4, dans lequel la vitesse linéaire du gaz de préchauffage injecté est dans la plage de 15 à 72 (m/s).

**6.** Procédé d'utilisation d'un haut fourneau selon la revendication 1, dans lequel la partie d'injection de gaz (A) est agencée entre un emplacement à une profondeur de 7 m à partir de la ligne de stock et l'emplacement à 1/3 de la hauteur totale de l'arbre à partir de l'extrémité inférieure de l'arbre.

7. Procédé d'utilisation d'un haut fourneau selon la revendication 1, dans lequel au moins quatre parties d'injection de gaz (A) ou plus sont agencées à des intervalles réguliers dans la direction circonférentielle du four.

8. Procédé d'utilisation d'un haut fourneau selon la revendication 1, dans lequel le gaz de préchauffage ayant une température de 200 °C ou plus est injecté pour maintenir une température de gaz maximum d'au moins 80 °C ou plus.

9. Procédé d'utilisation d'un haut fourneau selon la revendication 8, dans lequel le gaz de préchauffage a une température de 200 °C à 1000 °C.

10. Procédé d'utilisation d'un haut fourneau selon la revendication 8, dans lequel le gaz de préchauffage est un gaz d'échappement de combustion duquel l'$O_2$ a été extrait.

11. Procédé d'utilisation d'un haut fourneau selon la revendication 8, dans lequel le gaz de préchauffage est un gaz d'échappement de combustion qui contient au moins un gaz choisi dans le groupe comprenant CO et $CO_2$.

12. Procédé d'utilisation d'un haut fourneau selon la revendication 8, dans lequel le gaz de préchauffage est un gaz produit en brûlant un gaz de haut fourneau.

13. Procédé d'utilisation d'un haut fourneau selon la revendication 8, dans lequel le gaz de préchauffage est un gaz produit en chauffant un gaz de haut fourneau.

14. Procédé d'utilisation d'un haut fourneau selon la revendication 8, dans lequel le gaz de préchauffage est injecté à partir d'orifices d'injection sur plusieurs niveaux jusque dans le four, les orifices d'injection sur plusieurs niveaux étant disposés dans la direction de hauteur du haut fourneau.

15. Procédé d'utilisation d'un haut fourneau selon la revendication 8, comprenant en outre la commande de l'emplacement de hauteur d'un orifice d'injection à travers lequel le gaz de préchauffage est injecté sur la base d'au moins une parmi la température de gaz de préchauffage et la température de gaz maximum.

16. Procédé d'utilisation d'un haut fourneau selon la revendication 1, dans lequel le gaz de préchauffage a une composition telle que $Fe_2O_3$ est réduit.

17. Procédé d'utilisation d'un haut fourneau selon la revendication 16, dans lequel le gaz de préchauffage a une composition telle que $Fe_2O_3$ est réduit et telle que ZnO est réduit à Zn.

18. Procédé d'utilisation d'un haut fourneau selon la revendication 16, dans lequel le gaz de préchauffage a un rapport de CO sur (CO + $CO_2$), à savoir CO/(CO + $CO_2$), de 0,05 ou plus et a une température de 500 °C à 900 °C.

19. Procédé d'utilisation d'un haut fourneau selon la revendication 17, dans lequel le gaz de préchauffage a un rapport de CO sur (CO + $CO_2$), à savoir CO/(CO + $CO_2$), de 0,05 ou plus et a une température de 800 °C à 900 °C.

# FIG. 1

# FIG. 2

# FIG. 3

# FIG. 4a

(PCR 130kg/t)

# FIG. 4b

(PCR 160kg/t)

# FIG. 5

# FIG. 6

## FIG. 7a

FURNACE
WALL

(A=64)

## FIG. 7b

FURNACE
WALL

(A=32)

## FIG. 7c

FURNACE
WALL

(A=16)

## FIG. 7d

FURNACE
WALL

(A=8)

## FIG. 7e

FURNACE
WALL

(A=4)

# FIG. 8a

INVENTIVE EXAMPLE

# FIG. 8b

COMPARATIVE EXAMPLE 1

# FIG. 9a

INVENTIVE EXAMPLE

# FIG. 9b-1

COMPARATIVE EXAMPLE 2

# FIG. 9b-2

COMPARATIVE EXAMPLE 2

FIG. 10

# FIG. 11a

# FIG. 11b

# FIG. 12

DIMENSIONLESS
INJECTION HEIGHT 0.8

AMOUNT OF PREHEATING GAS
INJECTED INTO SHAFT 65Nm³/t

# FIG. 13

AMOUNT OF GAS INJECTED
INTO SHAFT 1000°C 100Nm³/t

# FIG. 14

DIMENSIONLESS
INJECTION HEIGHT 0.6
TEMPERATURE OF PREHEATING GAS
INJECTED INTO SHAFT 600°C

FIG. 15a    FIG. 15b

900°C    900°C

FIG. 16a    FIG. 16b

SGI    SGI

900°C    900°C

# FIG. 17a

SGI

900°C

# FIG. 17b

SGI

900°C

# FIG. 18

# FIG. 19

CO REDUCTION OF Fe₂O₃

# FIG. 20

# FIG. 21

# FIG. 22

H₂ REDUCTION OF Fe₂O₃

# FIG. 23

CO REDUCTION OF Fe₂O₃

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008214735 A
- JP 2005105046 A
- EP 0273420 A2